Europäisches Patentamt

European Patent Office

Office européen des brevets

(11) Veröffentlichungsnummer: **0 447 658 A2**

# EUROPÄISCHE PATENTANMELDUNG

(21) Anmeldenummer: 90124880.7

(22) Anmeldetag: 20.12.90

(51) Int. Cl.⁵: **B60N 2/16**

(30) Priorität: 22.03.90 DE 4009212

(43) Veröffentlichungstag der Anmeldung:
25.09.91 Patentblatt 91/39

(84) Benannte Vertragsstaaten:
AT BE CH DE DK ES FR GB GR IT LI LU NL SE

(71) Anmelder: IMS Morat Söhne GmbH
Hauptstrasse 52
W-7821 Eisenbach 1(DE)

(72) Erfinder: Peghini, Gerhard
Herrenberg 18
W-7821 Eisenbach 1(DE)

(74) Vertreter: Schmitt, Hans, Dipl.-Ing. et al
Patentanwälte Dipl.-Ing H. Schmitt Dipl.-Ing.
W. Maucher Dreikönigstrasse 13
W-7800 Freiburg(DE)

(54) **Fahrzeugsitz.**

(57) Bei einem Fahrzeugsitz (1), der mittels eines schlittenförmigen Sitzlängs-Verstellers (3) in Fahrtrichtung hin- und herverstellbar ist, ist außerdem eine Höhenverstellung einer Tragvorrichtung (5) relativ zu diesem Versteller (3) vorgesehen, wobei die Tragvorrichtung (5) die eigentliche Sitzfläche (6) und die Rückenlehne (7) trägt. Für die Höhenverstellung sind jeweils zwei mit Abstand zueinander angeordnete Paare von Lagern (9) vorgesehen, deren Drehachsen miteinander fluchten, wobei an diesen Lagern (9) Lagerachsen (10) vorgesehen sind, die in Innenausnehmungen (11) einer Welle (13) eingreifen, die durchgehend über den gesamten Abstand von solchen fluchtenden Lagern (9) verläuft und an beiden Lagern (9) gelagert ist. An der Welle (13) greifen die entsprechenden Verstellmittel, bevorzugt Schwenkhebel (12) einerseits für den Drehantrieb der Welle (13) und andererseits für die Höhenverstellung an. Da somit die Welle eines jeden Lagers für die Höhenverstellung beidseitig gelagert ist, können die auftretenden Kräfte günstiger eingeleitet werden, so daß eine Zunahme des Lagerspieles oder die Entstehung eines Spieles an den ursprünglich spielfreien Lagern nicht oder erst nach einer sehr langen Lebensdauer auftritt.

Fig. 2

Die Erfindung betrifft einen Fahrzeugsitz, der mittels eines schlittenförmigen Sitzlängs-Verstellers auf in Fahrtrichtung angeordneten Schienen oder dergleichen hin- und herverstellbar und festlegbar ist und der an dem Versteller eine winkel- und/oder höhenverstellbare Tragvorrichtung für die Sitzfläche aufweist, wobei an parallel zueinander verlaufenden, in Gebrauchsstellung in Fahrtrichtung orientierten Trägern, Holmen oder dergleichen einander jeweils mit Abstand gegenüberliegende und miteinander fluchtende Lager für verdreh-und verschwenkbare oder verschiebbare Verstellmittel, -teile und/oder Führungselemente zwischen Versteller und Tragvorrichtung für deren Höhenverstellung angeordnet sind.

Derartige Fahrzeugsitze sind insbesondere für Personenkraftwagen in vielfältigen Ausführungen bekannt. Neben der üblichen Hin- und Herverstellung zur Anpassung an Personen unterschiedlicher Länge ist seit geraumer Zeit auch eine Höhenverstellung solcher Sitze bekannt, da kleinere Personen aus einer nur weiter nach vorne verstellten Position zwar die Bedienungselemente genügend gut erreichen, aber noch eine unbefriedigende Sicht haben.

Für diese Höhenverstellung sind jeweils Träger oder Holme des Verstellers einerseits und der Tragvorrichtung des eigentlichen Sitzes andererseits gleichzeitig durchsetzende Schwenkbolzen bekannt, die jeweils Bohrungen der genannten Träger durchsetzen und beispielsweise beidseitig ihrer Lagerstelle vernietet sind. Einerseits durchsetzen diese achsenartigen Bolzen einen Träger und andererseits einen Schwenkhebel, durch dessen Verschwenkung dann die gewünschte Höhenverstellung durchgeführt werden kann.

Da die Höhenverstellung in der Regel unter der Last der den Sitz benutzenden Person geschieht und außerdem die Achsen und Lager dieser Höhenverstellung das Gewicht dieser Person während des Fahrbetriebes aufnehmen und durch den Fahrbetrieb dynamischen Belastungen ausgesetzt sind, ergibt sich in diesen Verstell-Lagern nach relativ kurzer Zeit ein mehr und mehr zunehmendes Spiel. Dies ist auch dann nicht zu vermeiden, wenn im Neuzustand eine so enge Passung gewählt ist,daß überhaupt kein Spiel vorhanden ist. Dadurch, daß diese Bolzen nicht nur in Drehrichtung, sondern auch in Querrichtung einer Biege- und Kippbelastung ausgesetzt sind, können allmähliche Verformungen und Verschleiß nicht vermieden werden. Die Folge ist, daß solche verstellbaren Sitze nach relativ kurzer Zeit wackelig werden und dann auch während des Fahrbetriebes mehr und mehr störende Klappergeräusche verursachen. Dabei ist davon auszugehen, daß schon ein geringfügiges, für die Einstellbewegung erforderliches Spiel aufgrund der ungewollten Hin- und Herbewegungen durch die Federbewegungen des Fahrzeuges sehr schnell in der geschilderten Weise vergrößert wird.

Der Erfindung liegt deshalb die Aufgabe zugrunde, einen Fahrzeugsitz der eingangs erwähnten Art zu schaffen, der eine praktisch spielfreie Lagerung mit langer Lebensdauer, möglichst mit einer auch der Lebensdauer des Fahrzeugsitzes selbst entsprechenden Lebensdauer aufweist.

Die überraschende Lösung dieser scheinbar unlösbaren Aufgabe besteht im wesentlichen darin, daß als für die Höhenverstellung an den Lagern verdrehbares Verstellteil eine die Lagerachsen von miteinander fluchtenden Lagern jeweils in einer Innenausnehmung in sich aufnehmende, mit Verstellmitteln für die Höhenverstellung und/oder für die Führung formschlüssig oder fest verbundene Welle vorgesehen ist, die durchgehend über den gesamten Abstand der fluchtenden Lager verläuft und an beiden Lagern gelagert ist.

Jedes der Lager weist somit eine Welle auf, die wenigstens zweiseitig gelagert ist und somit praktisch keinem Biegemoment ausgesetzt ist. Dennoch braucht die Zahl der Lagerstellen nicht erhöht zu werden, da an jedem Lager nur eine Lagerstelle für diese Welle gebraucht wird. Das jeweils fluchtende Lager dient also für sein Gegenüber als zweite Lagerstelle. Somit hat die Welle die Vorteile jeder beidseitig angespannten oder gelagert Welle und unterliegt einem ganz erheblich geringeren Verschleiß als eine einseitig gelagerte Welle oder Achse.

Da somit eine wesentlich günstigere Lagerung der für die Verstellbewegungen und dabei erfolgende Verschwenkungen dienenden Welle kann unter Umständen sogar die Größe der Lager vermindert werden, so daß das etwas größere Gewicht der durchgehenden Welle zumindest teilweise kompensiert wird. Auch können die Lager selbst einfacher gestaltet werden, da sie praktisch keine Einspannmomente aufnehmen müssen.

Besonders zweckmäßig ist es dabei, wenn an der Außenseite der durchgehenden Welle für die Höhenverstellung ein Verstellantrieb, beispielsweise ein Handantrieb oder ein Motor mit Getriebe und Schwenkhebel angreifen, die ihrerseits schwenkbar mit dem seinen Abstand bei der Höhenverstellung ändernden Gegenstück verbunden sind.

Dabei sind zwei verschiedene Möglichkeiten denkbar, denn die durchgehende, für die Höhenverstellung drehbare Welle kann an der Sitz-Tragvorrichtung gelagert und mit Hebeln oder dergleichen an dem Sitzlängs-Versteller angeordneten Gegenlagern befestigt sein oder die Welle kann an dem Versteller gelagert und mittels Hebeln oder dergleichen mit der höhenverstellbaren Tragvorrichtung verbunden sein. Letzteres ist die häufig einfachere Lösung, weil dann auch die Antriebsmittel weitgehend ortsfest an dem Längsversteller angeordnet sein können.

Besonders zweckmäßig ist es, wenn die - zentrale Innenausnehmungen aufweisende - zwei fluchtende Lagerstellen verbindende Welle eine Hohlwelle, vorzugsweise ein Rohr ist. In diesem Falle sind dann auch die Innenausnehmungen durchgehend. Dies spart nicht nur Gewicht, sondern verbilligt den Herstellungspreis der Welle.

Darüber hinaus wird dadurch eine Ausgestaltung der Erfindung von ganz erheblichem Vorteil ermöglicht, die darin bestehen kann, daß die die Hohlwelle aufnehmenden Achsen zweier fluchtender Lager durch die gesamte Hohlwelle hindurchgeführt und einstückig miteinander verbunden sind. Es ergibt sich dann also nicht nur für die Welle sondern auch für die die Drehung und Lagerung der Welle ermöglichende Achse eine beidseitige Einspannung jeweils an dem gegenüberliegenden Lager, wodurch die Widerstandsfähigkeit gegen Querkräfte und Schwingungen und dergleichen beim Fahrbetrieb weiter erhöht wird. Vor allem eine solche Kombination einer durchgehenden Achse und einer darauf gelagerten durchgehenden Welle erlaubt bei günstiger Abmessung und Werkstoffpaarung eine sehr langdauernde Spielfreiheit beziehungsweise hohe Lebensdauer eines ursprünglich gewählten Spieles, welches dabei so klein gewählt werden kann, daß ein Fahrzeugsitz keine relativen Wackelbewegungen gegenüber seiner Verankerung durchführen kann.

Ausgestaltungen des erfindungsgemäßen Fahrzeugsitzes und insbesondere seiner der Höhenverstellung dienenden Lager sind Gegenstand der Ansprüche 6 bis 10.

Anspruch 6 gibt dabei Befestigungsmöglichkeiten für die durchgehende Achse an, die entweder deren Demontage oder aber eine besonders gute und dennoch preiswerte Fixierung erlaubt.

Die Maßnahmen des Anspruches 7 verbessern die relative Drehbarkeit der Welle auf der Achse, die nicht unbedingt über ihre gesamte Länge Kontakt mit der Achse haben muß. Dabei sind Lagerbüchsen, also Gleitlager vorgeschlagen, die in radialer Richtung wenig Platz benötigen. Außerdem können dabei günstige Werkstoffpaarungen und Lagerungen gewählt werden, die keine Schmierung benötigen und dennoch leichtgängig sind. Beispielsweise können Lagerbüchsen aus Polytetrafluoräthylen oder mit einem Überzug aus diesem Kunststoff gewählt werden

Die Ansprüche 8 u.9 betreffen Maßnahmen, die die Bewegung der Hohlwelle auf die zur Höhenverstellung dienenden Verstellelemente, insbesondere Schwenkhebel und an dem dabei verstellten Gegenstück befindliche Lager übertragen werden können.

Anspruch 10 gibt eine Größenrelation der durch die erfindungsgemäße durchgehende Welle gebildeten Lager einerseits und ihrer Durchmesser an, woraus sich die günstigen Verhältnisse bei der Aufnahme dynamischer Kräfte während des Fahrbetriebes bei Vermeidung eines allmählichen Ausschlagens der Lager ergeben.

Vor allem bei Kombination einzelner oder mehrerer der vorbeschriebenen Merkmale und Maßnahmen ergibt sich ein Fahrzeugsitz, dessen Höhenverstellung preiswert ist und wobei dennoch die Lagerungen der Höhenverstellung so gestaltet sind, daß sie ihr möglichst geringes Spiel über eine lange Lebensdauer, möglichst die gesamte Lebensdauer des Sitzes beibehalten bzw. die Neigung des Fahrzeugsitzes, bei schlechten Wegstrecken relativ zu seiner Verankerung zu wackeln, für eine lange Lebensdauer vermieden wird.

Nachstehend ist die Erfindung mit ihren ihr als wesentlich zugehörenden Einzeiheiten anhand der Zeichnung noch näher beschrieben. Es zeigt in zum Teil schematisierter Darstellung:

Fig. 1 eine teilweise im Querschnitt quer zu Verstell-Schienen dargestellte Stirnansicht eines schlittenförmigen Sitzlängs-Verstellers und einer daran gelagerten, höhenverstellbaren Tragvorrichtung für einen Fahrzeugsitz,

Fig. 2 einen Längsschnitt durch den Fahrzeugsitz-Unterbau gemäß der Linie B-B in Fig.1, wobei zusätzlich ein Teil der Sitzfläche und der Rückenlehne des Fahrzeugsitzes angedeutet sind, sowie

Fig. 3 einen horizontalen Schnitt durch den Fahrzeugsitz-Unterbau gem. der Linie A-A in Fig.1.

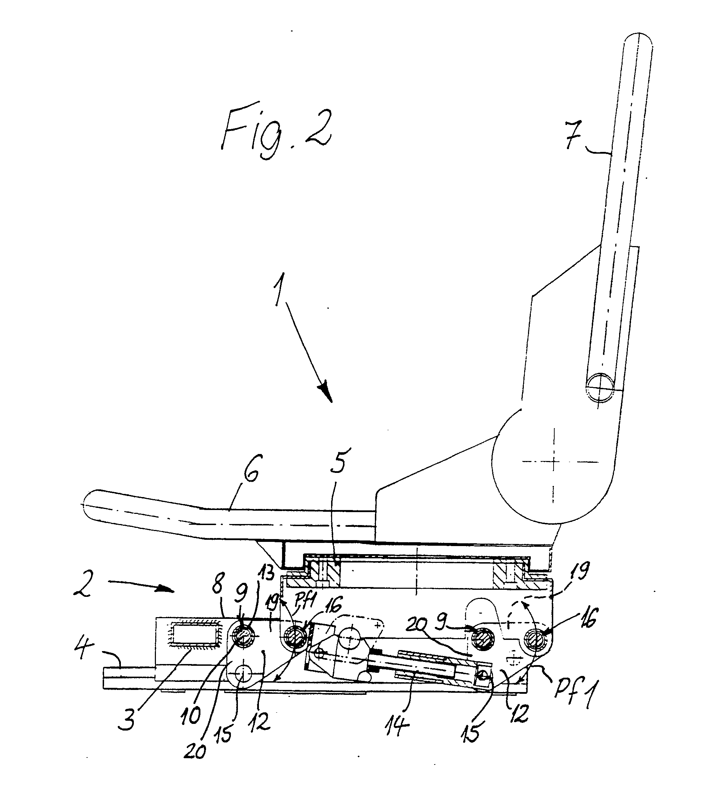

Ein im ganzen mit 1 bezeichneter, in Fig. 2 bis auf Polsterungen und dergleichen weitgehend vollständig erkennbarer Fahrzeugsitz hat einen wiederum im ganzen mit 2 bezeichneten Unterbau, der einen schlittenförmigen Sitzlängs-Versteller 3 aufweist, welcher auf in Fahrtrichtung am Fahrzeugboden angeordneten Schienen 4 oder sonstigen Führungen hin- und herverstellbar und festlegbar ist. Zu dem Unterbau 2 gehört außerdem eine winkel- und/oder höhenverstellbare Tragvorrichtung 5 für den eigentlich Sitz bzw. die Sitzfläche 6. Diese Tragvorrichtung 5 ist in noch zu beschreibender Weise an dem Versteller 3 höhenverstellbar und in unterschiedlichen Höhenlagen festlegbar gelagert. Somit kann der Fahrzeugsitz 1 nicht nur in seiner Entfernung zu einem Lenkrad eines Fahrzeuges, sondern auch in seiner Höhe und eventuell bezüglich der Neigung der Sitzfläche 6 verstellt werden. Die außerdem mögliche Verstellung der Neigung der Rückenlehne 7 kann in bekannter Weise erfolgen.

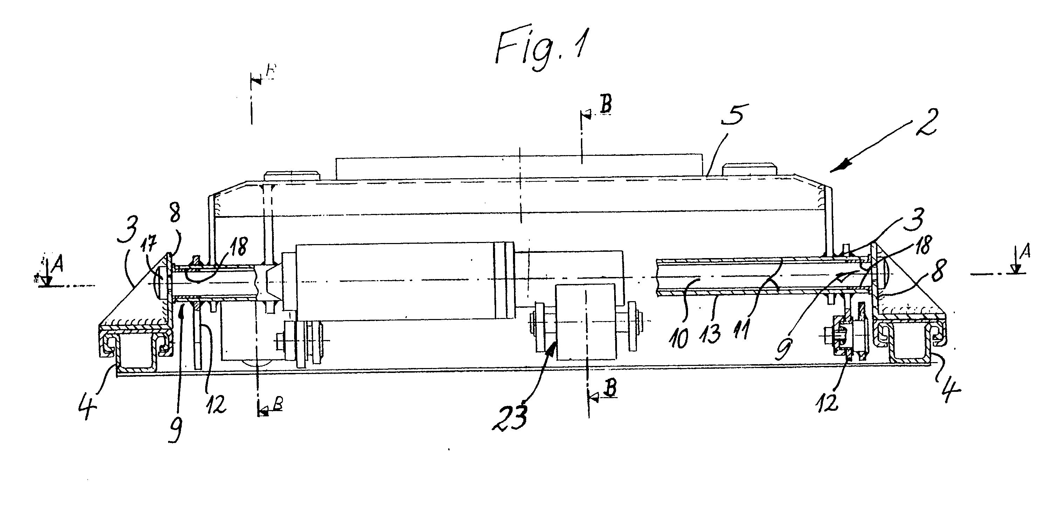

Vor allem in den Fig.1 u.2 erkennt man, daß an parallel zueinander verlaufenden, in Gebrauchsstellung in Fahrtrichtung orientierten Trägern 8, Holmen oder dergleichen einander jeweils mit Abstand gegenüberliegende und miteinander fluchtende Lager 9 für noch näher zu beschreibende verdreh- und verschwenkbare oder verschiebbare Verstellmittek, -teile und/oder Führungselemente zwischen Versteller 3 und Tragvorrichtung 5 für deren Höhenverstellung angeordnet sind. Dabei verdeutlich Fig .3, daß jeweils zwei derartige Paare von miteinander fluchtenden Lagern 9 - im Ausführungsbeispiel am Versteller 3 und dessen Trägern 8 - angeordnet sind.

Als für die Höhenverstellung an den Lagern 9 verdrehbares Verstellteil ist im Ausführungsbeispiel für jedes dieser Lager-Paare eine die Lagerachsen 10 von miteinander fluchtenden Lagern 9 jeweils in einer Innenausnehmung 11 oder Innenlängshöhlung in sich aufnehmende, mit Verstellmitteln, im Ausführungsbeispiel Schwenkhebeln 12, für die Höhenverstellung und/oder für die Führung fomschlüssig oder fest verbundene Welle 13 vorgesehen, die durchgehend über den gesamten Abstand der fluchtenden Lager 9 verläuft und an beiden Lagern 9 gelagert ist. Die Welle 13 dient auf diese Weise gleichzeitig zur Bildung beider fluchtender Lager 9 und kann auch an ihren beiden Lagern 9 jeweils einen Schwenkhebel 12 antreiben und somit nicht nur aufgrund ihrer beidseitigen Lagerung die auftretenden Kräfte besser übertragen und eine größere Stabilität und Steifigkeit bewirken, sondern auch die Verstellkräfte gleichmäßiger auf das relativ zu den Lagern 9 verstellbare Teil, im Ausführungsbeispiel die Tragvorrichtung 5, übertragen, so daß auch bei dieser Verstellbewegung keine Biegemomente auftreten, die die Lager so überlasten, daß sie allmählich ausgeschlagen werden oder sich ihr Spiel zu schnell vergrößert.

In vorteilhafter Weise wird also die Antriebskraft für die Höhenverstellung über die durchgehende Welle 13 synchron und gleichzeitig an beiden fluchtenden Lagern weitergegeben und somit auch der Verstellvorgang ohne die Gefahr eines Verkantens durchgeführt, so daß auch gegenüber einer nur einseitigen Einleitung der Verstellkräfte unter Umständen geringere Kräfte für die Verstellung genügen.

An der Außenseite der durchgehenden Welle 13 greift ein Verstellantrieb 14 an, der beispielsweise ein Handantrieb oder ein Motor mit Getriebe sein kann und seine Verstellbewegung über denselben Verschwenkhebel 12 auf die Welle 13 übertragen kann, der auch mittels eines weiteren Abschnittes an dem höhenverstellbaren Teil angreift. Vor allem in Fig.2 sind diese etwa dreieckförmigen Schwenkhebel 12 gut zu erkennen, die dabei eine etwa rechtwinklige Dreieckform haben, wobei die Lager 9 etwa im Bereich des rechten Winkels angeordnet sind, während an einer unterhalb der Lager 9 befindlichen Befestigungsstelle 15 der Antrieb 14 unmittelbar oder auch über übertragungsgestänge angreifen kann, während schließlich ein zweites, in der in Fig.2 dargestellten mittleren Höhenposition etwa auf gleicher Höhe wie die Lager 9 liegendes Lager 16 durch die Verdrehung der Welle 13 in Richtung des Doppelpfeiles Pf 1 auf- und abverschwenkbar ist und an der Tragvorrichtung 5 befestigt ist, so daß diese demgemäß höher oder tiefer verschwenkt wird. Wird dabei eine Verschwenkung synchron an allen Schwenkhebeln 12 durchgeführt, bedeutet dies eine Höhenverstellung der Sitzfläche 6, wird aber jeweils nur eine Welle 13 verdreht und somit nur ein Schwenkhebel-Paar bewegt, kann die Neigung des Sitzes 6 verstellt werden.

Während im Ausführungsbeispiel also die durchgehende, für die Höhenverstellung drehbare Welle 13 an dem Versteller 3 und dessen Trägern 8 gelagert und mittels der Hebel 12 mit der Tragvorrichtung 5 verbunden ist, die durch die Verdrehung der ihre Höhenlage behaltenden Welle 13 in der Höhe oder der Neigung verstellt werden kann, wäre auch eine Ausführungsform denkbar, bei welcher diese für die Höhenverstellung drehbare Welle 13 an der Tragvorrichtung 5 gelagert und mit Hebeln 12 oder dergleichen an dem Sitzlängs-Versteller und dort angeordneten Gegenlagern befestigt ist, wodurch ebenfalls die für die Höhenverstellung erforderliche Relativbewegung zwischen Versteller 3 und Tragvorrichtung 5 durchgeführt werden könnte.

Da die Welle 13 die Lagerachsen 10 in ihrer Innenausnehmung 11 aufnehmen soll und über die gesamte Entfernung zwischen zwei fluchtenden Lagern 9 durchgehend ist, ist es für die Steifigkeit und die Einfachheit der Konstruktion und Montage vorteilhaft, wenn diese Welle eine Hohlwelle, vorzugsweise ein Rohr ist. Dies ermöglicht die in Fig.1 dargestellte Ausgestaltung, wonach nämlich auch die diese Hohlwelle aufnehmenden Achsen 10 zweier fluchtender Lager 9 durch die gesamte Hohlwelle hindurchgeführt und einstückig miteinander verbunden sind. Dadurch tragen die Lagerachsen zur gegenseitigen Abstützung und Aussteifung der beiden fluchtenden Lager 9 in erheblichem Umfange bei, so daß dynamische Querkräfte, Schwingbewegungen und auch die Verstellkräfte keine nennenswerten Verformungen an den Lagern 9 bewirken können und somit keine Vorkehrungen zur Aufnahme von großen Einspannmomenten erforderlich sind. Außerdem bleiben die Lager 9 von einem übermäßigen Verschleiß verschont, so daß sie die bei der Konstruktion gewählten Toleranzen und eine praktische Spielfreiheit über eine lange Lebensdauer beibehalten.

Die durch zwei Lager 9 durchgehende Achse 10 ist im Ausführungsbeispiel stirnseitig mittels die Außenseite des jeweiligen Trägers 8 des Verstellers 3 - bei einer abgewandelten Ausführungsform der Tragvorrichtung 5 - durchsetzender Kopfschrauben 17 befestigt, so daß auch eine Demontage möglich ist. Falls eine solche Demontage, die aufgrund der hohen Lebensdauer der Lager 9 kaum erforderlich wird, nicht durchgeführt werden soll, könnte die Achse 10 auch mit den Trägern 8 unlösbar verbunden, beispielsweise verschweißt sein, was die Gesamtherstellung vereinfacht und verbilligt.

In Fig.1 erkennt man außerdem für eine der beiden Wellen 13 für die Höhenverstellung, daß zwischen der durchgehenden Achse 10 und dem durchgehenden, als Welle 13 dienenden Rohr benachbart zu der Befestigung der Achse 10 an beiden Lagerstellen Lagerbüchsen 18 vorgesehen sind, die in ihrer axialen Erstreckung vorzugsweise wenigstens bis zu der Angriffsstelle der Betätigungs- oder Schwenkhebel 12, Antriebshebel oder dergleichen reichen. Es wird also insbesondere in diesem die Verstellkräfte übertragenden Bereich die Lagerung zwischen Hohlwelle 13 und Achse 10 bewirkt, während über den übrigen Längenbereich zwischen Welle 13 und Achse 10 ein Abstand bestehen kann.

Es wurde schon erwähnt, daß die Schwenkhebel 12 im Ausführungsbeispiel die Form rechtwinkliger Dreiecke haben. Die bedeutet, daß der zur Übertragung der Drehbewegung der durchgehenden Hohlwelle 13 an dieser formschlüssig oder verschweißt befestigte Hebel 12 mit einem Arm 19 und einer an ihm befindlichen Lagerstelle an dem weiteren Lager 16 des durch die Drehung der Welle 13 in seinem Abstand und damit in der Höhenlage verstellbaren Gegenstück, im Ausführungsbeispiel der Tragvorrichtung 5 für den Sitz, und mit einem zweiten Arm 20 - der im Ausführungsbeispiel zu dem ersten Arm 19 also in einem etwa rechten Winkel steht - an der Antriebsvorrichtung, die handbetätigt oder motorgetrieben sein kann, befestigt ist. Dies ergibt eine sehr einfache Konstruktion, denn durch die Betätigung des Verstellantriebes 14 wird nun ein solcher Schwenkhebel 12 um die Achse 10 verschwenkt, wodurch gleichzeitig die auf dieser Achse 10 gelagerte Welle 13 verdreht wird. Dies bewirkt, daß auch der am entgegengesetzten Ende befindliche Schwenkhebel 12 in gleicher Weise verschwenkt wird, so daß eine synchrone Höhenverstellung an den sich entsprechenden gegenüberliegenden Stellen der Tragvorrichtung 5 erfolgt. Dies kann gemäß den Doppelpfeilen Pf 1 in Fig.2 aus der dort dargestellten Position sowohl nach oben als auch nach unten erfolgen.

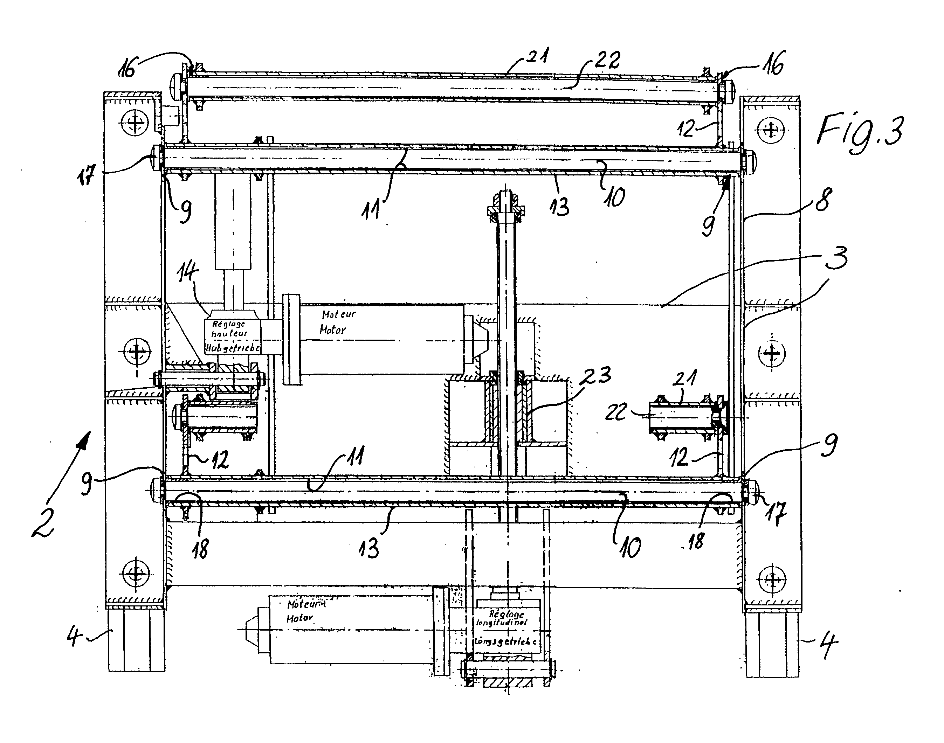

In Fig. 3 erkennt man dabei, daß die beiden auf einer Welle 13 befestigten Schwenkhebel 12 an an dem verstellbaren Teil, also im Ausführungsbeispiel der Tragvorrichtung 5 angreifenden Lagern 16 befestigt sind, die ihrerseits durch eine durchgehende Welle 21 und/oder Achse 22 gegeneinander ausgesteift und abgestützt sein können, wobei dies im Ausführungsbeispiel nach Fig. 3 aber nur bei einer solchen Welle 21 verwirklicht ist, während die parallel zu ihr angeordnete Welle und Achse unterbrochen ist, da sie bei der Verstellung nach unten sonst mit dem Antrieb 23 für die Längsverstellung des Fahrzeugsitzes 1 kollidieren würde. Aber schon dadurch, daß eines der Paare von Lagern 16 an der Tragvorrichtung 5 durch eine durchgehende Welle 21 und Achse 22 verbunden und ausgesteift ist, wird die Stabilität und Widerstandsfähigkeit gegen Verwindungen, Biegungen und Verformungen durch die Verstellbewegungen und beim Fahren vor allem auf holprigen Strecken auftretende Schwingungen und dergleichen weiter vergrößert. Somit werden auch diese Lager 16 und selbst solche Lager 16, bei denen die Welle und Achse wegen weiterer Einbauteile nicht durchgehend sein kann, bezüglich ihrer Lebensdauer verbessert.

Die Gesamtlänge des aus Welle und Achse gebildeten Lagers oder Lagerpaares ist also mehrfach größer als der Durchmesser des Lagers oder von Welle und Achse im Lagerbereich, beispielsweise ca. zwanzig bis vierzigmal, insbesondere dreißigmal länger als der Durchmesser der Lagerung, woraus die günstigen Verhältnisse bei der Aufnahme von Kräften ohne Vergrößerung des Lagerspieles resultiert.

Bei dem Fahrzeugsitz 1, der mittels eines schlittenförmigen Sitzlängs-Verstellers 3 in Fahrtrichtung hin- und herverstellbar ist, ist außerdem eine Höhenverstellung einer Tragvorrichtung 5 relativ zu diesem Versteller 3 vorgesehen, wobei die Tragvorrichtung 5 die eigentliche Sitzfläche 6 und die Rückenlehne 7 trägt. Für die Höhenverstellung sind jeweils zwei mit Abstand zueinander angeordnete Paare von Lagern 9 vorgesehen, deren Drehachsen miteinander fluchten, wobei an diesen Lagern 9 Lagerachsen 10 vorgesehen sind, die in Innenausnehmungen 11 einer Welle 13 eingreifen, die durchgehend über den gesamten Abstand von solchen fluchtenden Lagern 9 verläuft und an beiden Lagern 9 gelagert ist. An der Welle 13 greifen die entsprechenden Verstellmittel, bevorzugt Schwenkhebel 12 einerseits für den Drehantrieb der Welle 13 und andererseits für die Höhenverstellung an. Da somit die Welle eines jeden Lagers für die Höhenverstellung beidseitig gelagert ist, können die auftretenden Kräfte günstiger eingeleitet werden, so daß eine Zunahme des Lagerspieles oder die Entstehung eines Spieles an den ursprünglich spielfreien Lagern nicht oder erst nach einer sehr langen Lebensdauer auftritt.

**Patentansprüche**

1. Fahrzeugsitz (1), der mittels eines schlittenförmigen Sitzlängs-Verstellers (3) auf in Fahrtrichtung angeordneten Schienen (4) oder dergleichen hin- und herverstellbar und festlegbar ist und der an dem Versteller (3) eine winkel- und/oder höhenverstellbare Tragvorrichtung (5) für die Sitzfläche (6) aufweist, wobei an parallel zueinander verlaufenden, in Gebrauchsstellung in Fahrtrichtung orientierten Trägern (8), Holmen oder dergleichen einander jeweils mit Abstand gegenüberliegende und miteinander fluchtende Lager (9) für verdreh- und verschwenkbare oder verschiebbare Verstellmittel, -teile und/oder Führungselemente zwischen Versteller (3) und Tragvorrichtung (5) für deren Höhenverstellung angeordnet sind, **dadurch gekennzeichnet**, daß als für die Höhenverstellung an den Lagern (9) verdrehbares Verstellteil eine die Lagerachsen (10) von miteinander fluchtenden Lagern (9) jeweils in einer Innenausnehmung (11) in sich aufnehmende, mit Verstellmitteln für die Höhenverstellung und/oder für die Führung formschlüssig oder fest verbundene Welle (13) vorgesehen ist, die durchgehend über den gesamten Abstand der fluchtenden Lager (9) verläuft und an beiden Lagern (9) gelagert oder eingespannt ist.

2. Fahrzeugsitz nach Anspruch 1, dadurch gekennzeichnet, daß an der Außenseite der durchgehenden Welle (13) für die Höhenverstellung ein Verstellantrieb (14), beispielsweise ein Handantrieb oder ein Motor mit Getriebe und Schwenkhebel (12) angreifen, die vorzugsweise ihrerseits schwenkbar mit dem seinen Abstand bei der Höhenverstellung ändernden Gegenstück verbunden sind.

3. Fahrzeugsitz nach Anspruch 1 oder 2, dadurch gekennzeichnet, daß die durchgehende, für die Höhenverstellung drehbare Welle (13) an der Sitz-Tragvorrichtung (5) gelagert und mit Hebeln (12) oder dergleichen an am Sitzlängs-Versteller (3) angeordneten Gegenlagern befestigt ist oder daß die Welle (13) an dem Versteller (3) gelagert und mit Hebeln (12) oder dergleichen mit der Tragvorrichtung (5) verbunden ist.

4. Fahrzeugsitz nach einem der Ansprüche 1 bis 3, dadurch gekennzeichnet, daß die jeweils zwei fluchtende Lagerstellen verbindende Welle (13) eine Hohlwelle, vorzugsweise ein Rohr ist.

5. Fahrzeugsitz insbesondere nach einem der Ansprüche 1 bis 4, dadurch gekennzeichnet, daß die die Hohlwelle (13) aufnehmenden Achsen 10 zweier fluchtender Lager (9) durch die gesamte Hohlwelle (13) hindurchgeführt und einstückig miteinander verbunden sind.

6. Fahrzeugsitz nach einem der Ansprüche 1 bis 5, dadurch gekennzeichnet, daß die durch zwei Lager (9) durchgehende Achse (10) stirnseitig lösbar, zum Beispiel mittels die Außenseite des Trägers (8) oder dergleichen des Sitzlängs-Verstellers (3) und/oder der Tragvorrichtung (5) durchsetzender Kopfschrauben (17) oder dergleichen befestigt oder fest verbunden, zum Beispiel verschweißt sind.

7. Fahrzeugsitz nach einem der Ansprüche 1 bis 6, dadurch gekennzeichnet, daß zwischen der durchgehenden Achse (10) und dem durchgehenden, als Welle (13) dienenden Rohr insbesondere unmittelbar zu der Befestigung der Achse (10) an beiden Lagern (9) Lagerbüchsen (18) vorgesehen sind, die in ihrer axialen Erstreckung vorzugsweise wenigstens bis zu der/den Angriffsstellen der Betätigungshebel (12), Antriebshebel oder dergleichen reichen.

8. Fahrzeugsitz nach einem der Ansprüche 1 bis 7, dadurch gekennzeichnet, daß mit der Welle (13) einerseits ein Antriebshebel und andererseits ein Höhenverstell-Hebel verbunden ist.

9. Fahrzeugsitz nach einem der Ansprüche 1 bis 8, dadurch gekennzeichnet, daß der zur Übertragung der Drehbewegung der durchgehenden Hohlwelle (13) an dieser formschlüssig oder verschweißt befestigte Hebel (12) mit einem Arm (19) und einer an ihm befindlichen Lagerstelle an einem weiteren Lager (16) des durch die Drehung der Welle (13) in seinem Abstand und damit in der Höhenlage verstellbaren Gegenstück, insbesondere der Sitz-Tragvorrichtung (5), und mit einem zweiten Arm (20) - also einstückig mit ihm verbunden - an der Antriebsvorrichtung (14) befestigt ist.

10. Fahrzeugsitz nach einem der Ansprüche 1 bis 9, dadurch gekennzeichnet, daß die beiden auf einer Welle (13) befestigten Schwenkhebel (12) zur Verstellung der Sitzhöhe oder -neigung an an dem verstellbaren Teil angreifenden Lagern (16) befestigt sind, die ihrerseits durch eine durchgehende Welle (21) und/oder durchgehende Achse (22) miteinander verbunden und gegeneinander ausgesteift sind.

11. Fahrzeugsitz nach einem der Ansprüche 1 bis 10, dadurch gekennzeichnet, daß die Gesamtlänge des aus Welle (13;21) und Achse (10;22) gebildeten Lagers oder Lagerpaares mehrfach größer als der Durchmesser des Lagers, beispielsweise ca.zwanzig bis vierzigmal, insbesondere dreißigmal länger als der Durchmesser der Lagerung ist.

*Fig.1*

EP 0 447 658 A2

Fig.2

Fig.3

Réglage
hauteur
Hubgetriebe

Moteur
Motor

Moteur
Motor

Réglage
longitudinal
Längsgetriebe

EP 0 447 658 A2